Europäisches Patentamt

European Patent Office

Office européen des brevets

(19)

(11) Numéro de publication: **0 563 260 B1**

(12) **FASCICULE DE BREVET EUROPEEN**

(45) Date de publication de fascicule du brevet: **08.03.95**  (51) Int. Cl.⁶: **C08J 5/04**, B29B 15/10

(21) Numéro de dépôt: **92903120.1**

(22) Date de dépôt: **18.12.91**

(86) Numéro de dépôt internationale :
**PCT/FR91/01031**

(87) Numéro de publication internationale :
**WO 92/11311 (09.07.92 92/17)**

(54) **DEMI-PRODUIT ET MATERIAU COMPOSITES THERMOPLASTIOUES A POLYMERES A CRISTAUX LIOUIDES ET PROCEDE DE FABRICATION DU MATERIAU.**

(30) Priorité: **19.12.90 FR 9015930**

(43) Date de publication de la demande:
**06.10.93 Bulletin 93/40**

(45) Mention de la délivrance du brevet:
**08.03.95 Bulletin 95/10**

(84) Etats contractants désignés:
**DE FR GB IT NL**

(56) Documents cités:
**EP-A- 0 133 825**
**EP-A- 0 182 335**
**EP-A- 0 303 173**
**EP-A- 0 392 939**
**GB-A- 2 105 247**

**Database WPIL, accession no. 89-202189,
Derwent Publications Ltd, (Londres, GB), &
JP-A-1 139 842**

(73) Titulaire: **AEROSPATIALE**
**37, Boulevard de Montmorency**
**F-75781 Paris Cédex 16 (FR)**

(72) Inventeur: **COFFY, René, Louis**
**13, rue des Lauriers**
**F-13960 Sausset-les-Pins (FR)**

(74) Mandataire: **Dubois-Chabert, Guy et al**
**Société de Protection des Inventions**
**25, rue de Ponthieu**
**F-75008 Paris (FR)**

EP 0 563 260 B1

**Description**

La présente invention se rapporte à un demi-produit composite thermoplastique armé, destiné à la fabrication de matériaux composites armés entièrement thermoplastiques, à hautes performances mécaniques et physico-chimiques.

Les matériaux composites auxquels s'applique l'invention sont les matériaux à renfort fibreux.

Les matériaux composites connus sont constitués de fibres de renfort minérales ou organiques assurant la résistance et la rigidité des pièces et d'une matrice organique ou inorganique assurant la liaison entre les fibres de renfort ainsi que le transfert des efforts entre lesdites fibres. Les fibres sont en général en verre, silice, carbone, carbure de silicium, alumine, aramide. La matrice est généralement en métal, en verre, en céramique ou en résine thermodurcissable.

Ces matériaux composites peuvent être utilisés dans de nombreux secteurs industriels et notamment dans le domaine spatial, aéronautique, avionique, automobile, nautique, dans le domaine des sports de compétition et de façon générale pour la réalisation de pièces mécaniques légères de haute tenue mécanique.

L'association de fibres et de matrices de natures physico-chimiques différentes conduit à des problèmes d'interface entre les fibres et la matrice tels que la mouillabilité, l'adhérence, l'oxydation, la création d'un autre corps (par exemple d'un oxyde dans le cas de fibres en céramique non oxyde), etc. Ces phénomènes sont en général résolus par addition d'au moins un troisième produit organique ou inorganique déposé sur les fibres et/ou dans la matrice. Lorsque ce troisième produit est déposé sur les fibres, il est connu sous le nom de produit d'ensimage.

L'utilisation de ce troisième matériau complique quelque peu la fabrication des matériaux composites augmentant ainsi leur durée de fabrication ainsi que leur coût.

Pour réduire le coût de production, améliorer les performances mécaniques et physico-chimiques ainsi que la tenue à l'endommagement des matériaux composites à renfort fibreux, il est connu d'utiliser une matrice thermoplastique au lieu d'une matrice thermodurcissable ou d'une matrice inorganique. Cependant, les thermoplastiques actuellement utilisés pour la matrice présentent des températures de mise en oeuvre élevée (supérieures à 400°C) entraînant, outre une consommation énergétique élevée, un outillage délicat pour piloter la pression dans le moule pénalisant encore le coût de production et le rendement de fabrication de ces composites.

Comme document relatif à des produits entièrement thermoplastiques utilisant des matrices à température de mise en oeuvre élevée, on peut citer le document EP-A-340 655.

Dans le document EP-A-0 303 173, il est décrit des articles moulés sous forme de feuilles constituées de fibres d'aramide et de fibres ou films de polyester aromatique ; ce dernier présente, à l'inverse de l'aramide, une anisotropie à l'état fondu. De plus, l'aramide n'est pas un polymère thermoplastique (voir à ce sujet le document EP-A-0 329 939). Ces polymères de nature différente présentent donc les problèmes d'interface décrits précédemment.

La présente invention a pour objet un demi-produit composite thermoplastique solide, destiné à la fabrication de matériaux composites à fibres de renfort permettant de remédier aux inconvénients ci-dessus. En particulier, elle permet d'éviter l'emploi d'un matériau additionnel d'interphase entre les fibres et la matrice d'un matériau composite tout en supprimant les problèmes d'interface entre ces dernières.

Pour ce faire, l'invention propose la réalisation d'un nouveau matériau composite entièrement thermoplastique dont les fibres de renfort et la matrice sont de même nature chimique ou de natures très proches l'une de l'autre.

Par ailleurs, l'invention permet la réduction des coûts de production et une simplification de mise en oeuvre des matériaux composites, par l'utilisation de polymères thermoplastiques particuliers pour la constitution de la matrice des matériaux composites.

Ces polymères sont des polymères à cristaux liquides, connus sous l'abréviation PCL.

Les polymères à cristaux liquides (PCL) thermotropes sont des polymères cristallins présentant quatre états stables et trois températures de changement de phase : solide-cristal liquide, cristal liquide-liquide isotrope et liquide isotrope-gaz.

L'état cristal liquide consiste en un arrangement des molécules et en une structure cristalline unidirectionnelle orientée alors que l'état liquide isotrope correspond à une structure amorphe et à une désorientation des molécules.

A l'état solide et à l'état fondu, les molécules des PCL sont organisées en longues chaînes parallèles (rigides à l'état solide) et constituent ainsi des fibres continues de polymère, qui interagissent entre elles selon la théorie des cristaux liquides. Les polymères PCL sont auto-renforçant avec une forte anisotropie cristalline.

2

Pour de plus amples détails sur les PCL, on peut se reporter aux documents EP-A-0 217 563 et "Specialty reinforcing fibers", Advanced Composite, mai/juin 1988 de Allen J. Klein, pp. 32-44.

De façon plus précise, l'invention a pour objet un demi-produit composite thermoplastique consistant exclusivement en des polymères thermoplastiques à cristaux liquides (PCL) dont au moins un premier polymère thermoplastique à cristaux liquides (PCL) est sous forme de fibres et présente une température de fusion déterminée et dont au moins un second polymère thermoplastique à cristaux liquides (PCL) présente une température de fusion inférieure à celle du premier polymère à cristaux liquides.

Par fibres, il faut comprendre tout filament ou fil long ou court.

Le demi-produit composite thermoplastique de l'invention est solide et s'utilise de la même façon qu'un pré-imprégné de résine thermodurcissable à l'état humide ; il peut se présenter sous forme de mèches ou fils continus pour la réalisation d'une pièce en matériau composite par bobinage filamentaire ou bien sous la forme d'un tissu ou encore de nappes de fibres empilées, orientées selon une ou plusieurs directions pour la réalisation de matériaux composites par drapage.

Ce demi-produit composite thermoplastique est donc destiné à la réalisation de matériaux composites thermoplastiques à fibres de renfort noyées dans une matrice.

Aussi, l'invention a encore pour objet un matériau composite thermoplastique réalisé exclusivement en des polymères à cristaux liquides (PCL), dans lequel les fibres de renfort sont constituées d'au moins un premier polymère thermoplastique à cristaux liquides (PCL), présentant une température de fusion déterminée, et dans lequel la matrice est constituée d'au moins un second polymère thermoplastique à cristaux liquides (PCL), présentant une température de fusion inférieure à celle du premier polymère à cristaux liquides (PCL).

Ce matériau composite est obtenu, selon l'invention, en utilisant le demi-produit décrit précédemment, en le soumettant, sous pression, à une température au moins égale à la température de fusion du second polymère à cristaux liquides mais inférieure à la température de fusion du premier polymère à cristaux liquides et en laissant refroidir le matériau obtenu.

Dans le cadre de l'invention, la phase solide cristalline à chaînes orientées des polymères doit être observable dans la gamme de températures d'utilisation des matériaux composites et en particulier dans une gamme de températures s'étendant de 0°C à 250°C.

En effet, la mise en oeuvre de polymères à cristaux liquides (PCL) conformément à l'invention n'a de sens que si la structure unidirectionnelle est conservée dans le produit fini solide de façon a conserver la tenue mécanique élevée qui lui a été conférée par cette dernière.

Les polymères à cristaux liquides (PCL) présentent un grand nombre d'avantages ; ils possèdent en particulier une grande résistance au feu et à la température du fait de leur état rigide limitant ainsi les mouvements des molécules dans toutes les directions. Ainsi, les molécules n'absorbent pas l'énergie thermique.

Par ailleurs, les polymères à cristaux liquides peuvent être exposés à un grand nombre de solvants organiques ou aqueux et à un grand nombre de matériaux corrosifs sans se décomposer. Ceci est dû à la présence d'un grand nombre de configurations d'atomes parfaitement stables chimiquement.

De plus, les polymères à cristaux liquides peuvent être exposés à des rayonnements (UV, visibles, micro-ondes) sans se décomposer et présentent une résistance diélectrique plus élevée que celles des polymères à chaînes flexibles.

Ils présentent en outre une faible masse volumique ($1,4 g/cm^3$ environ) et une résistance à la rupture élevée du fait de leur structure à fibres de renfort et sont deux à cinq fois plus rigides que l'acier, l'aluminium ou le verre. Les polymères à cristaux liquides ont approximativement la même rigidité que les fibres de carbone.

Les polymères à cristaux liquides (PCL) présentent encore l'avantage d'une température de fusion relativement basse, inférieure à 400°C, et généralement comprise dans la gamme de 280 à 400°C.

Les polymères à cristaux liquides (PCL) utilisables dans l'invention sont en particulier des polyesters obtenus par polycondensation d'acides bicarboxyliques aromatiques et/ou cycloaliphatiques avec des diols aromatiques et/ou cycloaliphatiques, optionnellement mélangés avec des hydroxyacides aromatiques, ayant des groupes fonctionnels polymérisables.

Des exemples de polymères utilisables dans l'invention sont ceux cités dans le document EP-340 655.

De façon avantageuse, on soumet le demi-produit composite à une température égale à la température de fusion du second polymère PCL pour former le matériau composite.

En effet, la phase de fusion sous pression du second polymère PCL, constituant la matrice, est quasi-instantané à partir du moment où cette température de fusion est atteinte et que la montée en température est aussi rapide qu'on le désire. Le temps nécessaire à cette montée en température est très inférieur par exemple à celui nécessaire à la polymérisation à chaud des résines synthétiques du genre résines époxy

EP 0 563 260 B1

thermodurcissables. Ce gain de temps est très intéressant pour réduire les coûts de fabrication puisque dans un même outillage, les pièces à fabriquer peuvent se succéder à une cadence plus rapide. En particulier, ce gain de temps est de 50 à 600%.

Pour une facilité de mise en oeuvre, la différence de température entre les températures de fusion du premier et second polymères PCL est au moins égale à 10°C et de préférence supérieure à 20°C.

La structure cristalline unidirectionnelle orientée des polymères thermoplastiques à cristaux liquides leur confère des caractéristiques mécaniques supérieures aux autres thermoplastiques ainsi que des propriétés physico-chimiques améliorées.

En outre, les polymères thermoplastiques à cristaux liquides peuvent être moulés facilement.

En particulier, les matériaux composites de l'invention peuvent être formés par moulage sous presse dans un moule avec action de la chaleur et de la pression, par moulage en autoclave ou par estampage, après ramollissement de la matrice à la manière des métaux en feuilles.

De façon avantageuse, les fibres de premier polymère PCL et le second polymère PCL sont agencés de façon à former un tissu. Ce tissu entièrement thermoplastique présente une grande souplesse de déformabilité, permettant de draper des formes relativement complexes contrairement à un grand nombre de tissus thermoplastiques à matrices non cristal liquide de l'art antérieur.

Ce tissu peut être réalisé de façon traditionnelle et utiliser les procédés classiques de production de tissus de l'industrie textile.

Le second polymère PCL peut avantageusement se présenter sous forme de fibres. Cette technologie intéresse plus spécialement les tisseurs car elle permet de réaliser en une seule étape de tissage un demi-produit à partir de fibres de renfort thermoplastiques et de fibres de matrice thermoplastiques.

Les tissus obtenus sont très souples et déformables. En particulier, il est possible de réaliser un tricot qui est un tissu particulièrement déformable bien adapté à la réalisation de pièces par estampage.

Il est aussi possible d'utiliser le second polymère PCL sous forme d'une poudre régulièrement répartie autour d'une ou plusieurs fibres de premier polymère PCL et de gainer l'ensemble par une gaine en un troisième polymère thermoplastique à cristaux liquides (PCL) assurant la cohésion des fibres de premier polymère PCL et de la poudre de second polymère PCL.

La poudre de faible granulométrie (inférieure à 30 micromètres) est introduite entre les fibres de premier polymère PCL par électrostatique, en dispersion aqueuse ou dans un bain fluidisé, puis on gaine l'ensemble par le troisième polymère PCL qui peut être de même nature que celui constituant la poudre ou bien d'une nature différente à condition que celle-ci soit compatible avec la poudre. De plus, ce troisième polymère PCL doit avoir une température de fusion inférieure à celle du premier polymère PCL et avantageusement très voisine ou égale à celle du second polymère PCL.

Pour des raisons pratiques, on peut utiliser le même polymère PCL pour constituer la poudre et la gaine.

En vue de faciliter le tissage, lorsque l'on utilise des fibres de premier et second polymères PCL, celles-ci sont regroupées sous forme de mèches et ce sont ces mèches que l'on tisse. Les mèches peuvent être constituée d'un seul polymère à cristaux liquides PCL (premier ou second polymère) ou bien être constitué d'un mélange de premier et second polymères PCL.

Bien que l'invention s'applique particulièrement bien à la réalisation de tissus, un stratifié étant un tissu particulier, elle peut s'appliquer à un fil bobiné. Dans ce cas, le second polymère PCL peut se présenter sous la forme d'une gaine entourant une ou plusieurs fibres de premier polymère PCL ou bien se présenter, comme décrit précédemment sous forme d'une poudre entourant une ou plusieurs fibres, gainées.

La quantité relative de premier polymère PCL et de second (voire troisième) polymère PCL du demi-produit composite ou du matériau composite obtenu, dépend en particulier de l'application du matériau envisagée. La proportion de premier et second (voire troisième) polymères PCL peut être adaptée de manière précise et la quantité de second (voire troisième) polymère PCL par unité de surface est sans limite. En effet, il est possible d'utiliser un demi-produit dont le premier polymère PCL représente de 1 à 99% en volume et le second polymère PCL additionné de l'éventuel troisième polymère PCL représente de 1 à 99% en volume.

Toutefois, pour des raisons de bonne tenue mécanique notamment en traction, on utilise de préférence un premier polymère PCL représentant de 30 à 80% en volume et un second polymère PCL (+ troisième polymère PCL) représentant de 20 à 70% en volume du demi-produit ou du matériau composite.

D'autres caractéristiques et avantages de l'invention ressortiront mieux de la description qui va suivre, donnée à titre illustratif et non limitatif, en référence aux dessins annexés dans lesquels :
- les figures 1 à 3 représentent schématiquement trois demi-produits thermoplastiques conformes à l'invention, et
- la figure 4 représente schématiquement la fabrication d'un matériau composite conforme a l'invention.

4

La description ci-après se réfère à la réalisation de tissus du fait de l'intérêt particulier de ce type de demi-produit, mais bien entendu, comme on l'a vu précédemment, l'invention est d'application beaucoup plus générale.

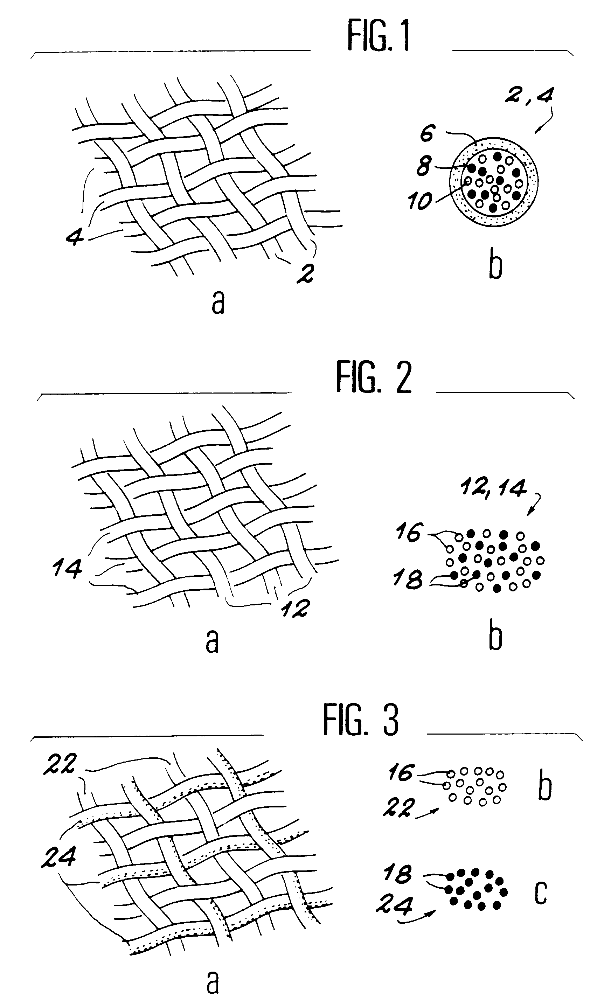

Selon un premier mode de réalisation, représenté sur la figure 1, le demi-produit thermoplastique de l'invention comporte (partie a) des mèches 2 et 4 de fibres, tissées de façon connue, les mèches 2 constituant par exemple la trame du tissu et les mèches 4 constituant la chaîne.

Ces mèches 2 et 4 sont formées, comme représenté sur la partie b, d'une gaine 6 d'un polymère à cristaux liquides (PCL) thermotropes et bas point de fusion, destiné à former la matrice du matériau composite entourant des fibres 8 d'un polymère à cristaux liquides (PCL) thermotropes à plus haut point de fusion, destiné à constituer la structure de renfort du matériau composite ; une poudre 10 est répartie de façon régulière autour des fibres 8. Cette poudre 10 est constituée aussi d'un polymère à cristaux liquides PCL thermotropes et bas point de fusion, destiné à former la matrice du matériau composite thermoplastique et présente une granulométrie inférieure à 30 micromètres.

Selon l'invention, le polymère à cristaux liquides PCL de la gaine 6 et celui de la poudre 10 présentent une température de fusion inférieure d'au moins 10°C à celle du polymère à cristaux liquides PCL constituant les fibres 8.

Pour des facilités de mise en oeuvre, on utilise le même polymère PCL pour constituer la gaine 6 et la poudre 10.

Les mèches 2 et 4 constituent en fait des fibres imprégnées par du thermoplastique.

La quantité de fibres de renfort 8 représente de 30 à 80% en volume du demi-produit, et la quantité de poudre et de gaine représente le complément.

Le nombre de fibres 8 par mèche est compris entre 50 et 40 000 et leur diamètre est compris entre 5 et 20 micromètres environ. Suivant le nombre de fibres 8, les mèches 2 et 4 peuvent présenter un diamètre de 0,15 à 2,8 mm et la gaine 6 peut présenter une épaisseur de 5 à 350 micromètres.

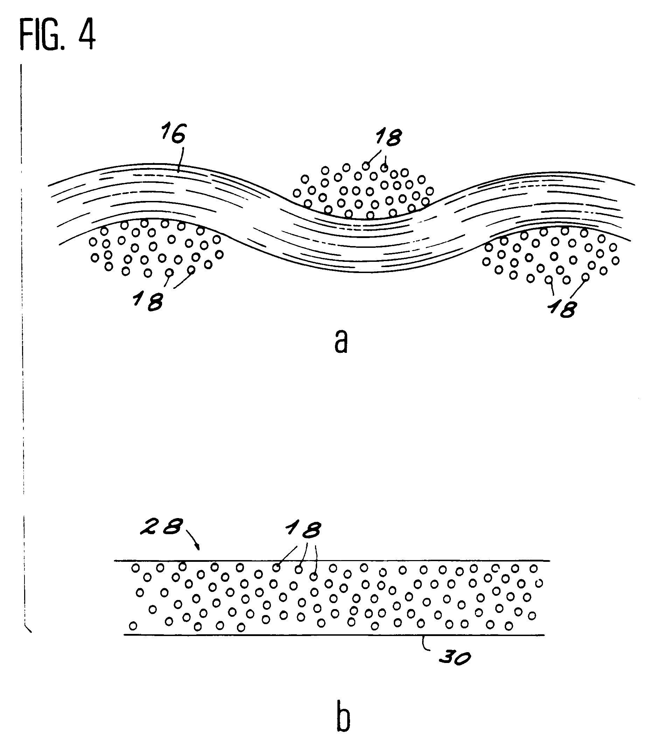

Le tissu composite thermoplastique représenté sur la figure 2 comporte des mèches ou tresses 12 de fibres thermoplastiques et des mèches ou tresses 14 de fibres thermoplastiques, tissées de façon connue (partie a) ; les mèches 12 constituent les fils de trame et les mèches 14 les fils de chaîne.

Ces mèches 12 et 14 sont constituées chacune (partie b) de fibres 16 d'un polymère à cristaux liquides (PCL) thermotropes et bas point de fusion, destiné à former la matrice du matériau composite, et de fibres 18 d'un polymère à cristaux liquides (PCL) thermotropes et à plus haut point de fusion, destiné à constituer les renforts du matériau.

Selon l'invention, la température de fusion des fibres 16 est inférieure d'au moins 10°C à celle des fibres 18. La quantité relative de fibres 16 et 18 par mèche peut être adaptée de façon précise et dépend de l'application envisagée pour le tissu obtenu.

Il est aussi possible, comme représenté sur la figure 3, d'utiliser des mèches 22 et 24, tissées (partie a), de constitution différente contrairement aux modes de réalisation représentés sur les figures 1 et 2 dans lesquels les mèches étaient toutes identiques.

En particulier, les mèches 22 (partie b) peuvent être constituées uniquement de fibres 16 de polymère à cristaux liquides (PCL) thermotropes destiné à constituer la matrice du matériau composite et les mèches 24 être constituées uniquement de fibres 18 de polymère à cristaux liquides (PCL) thermotropes destiné à constituer le renfort du matériau composite ; les fibres 16, respectivement 18 peuvent être disposées parallèlement ou bien tressées.

Sur la partie a de figure 3, les mèches 22 sont tissées pour former des fils de trame et des fils de chaîne en alternance avec les mèches 24 utilisées aussi pour former des fils de chaîne et des fils de trame.

Il est toutefois possible d'utiliser des mèches 22 pour constituer uniquement la chaîne et des mèches 24 pour constituer uniquement la trame du tissu (figure 4).

Dans les modes de réalisation représentés sur les figures 2 et 3, le nombre de fibres par mèches, varie de 50 à 40 000 et les fibres unitaires ont un diamètre de 5 à 40 micromètres, selon les quantités relatives souhaitées de polymère de renfort et de polymère PCL de matrice.

A partir des demi-produits représentés sur les figures 1 à 3, il est possible de former un matériau composite thermoplastique à renfort fibreux, par simple chauffage sous presse du demi-produit à une température égale à la température de fusion du polymère PCL destiné à constituer la matrice.

Sur la figure 4, est illustrée la transformation d'un tissu constitué (partie a) de mèches de fibres 16 destinées à constituer la matrice du matériau composite et de mèches de fibres 18 destinées à constituer le renfort du matériau composite. Les mèches de fibres 18 et les mèches de fibres 16 sont tissées, les fibres 18 constituant les fils de trame par exemple et les fibres 16 les fils de chaîne du tissu.

En portant sous pression le tissu représenté sur la partie a de la figure 4 à une température égale à la température de fusion des fibres 16 puis en laissant refroidir l'ensemble jusqu'à la température ambiante, on obtient le matériau composite 28 constitué des fibres de renfort 18 thermoplastiques à cristaux liquides (PCL) noyées dans une matrice 30 thermoplastique à cristaux liquides PCL de même composition que celle des fibres 16.

Comme polymère thermoplastique à cristaux liquides (PCL) utilisable dans l'invention, on peut citer ceux fabriqués par la firme CELANESE, commercialisé sous l'appellation VECTRAN[(R)], ceux fabriqués par la société ICI sous l'appellation SRP VICTREX[(R)] (Self Reinforcing Polymers), ceux commercialisés par la société MONTEDISON sous le nom de GRANLAR[(R)] ou encore ceux commercialisés par DUPONT DE NEMOURS sous l'appellation HX 3100[(R)].

On donne ci-après, des exemples de mise en oeuvre de l'invention.

EXEMPLE 1

Dans cet example, on utilise des fibres de VECTRAN "A" de type A 950 dont le point de fusion est de 280°C pour constituer le polymère de la matrice et des fibres de VECTRAN "C" de type C 130 dont le point de fusion est de 327°C pour constituer le renfort du matériau composite.

Un tissu tel que représenté sur la figure 2 a été confectionné en associant 30% en volume de fibres de VECTRAN "A" et 70% en volume de fibres de VECTRAN "C".

Un certain nombre de couches de ce tissu a été empilé dans un moule, placé ensuite dans une presse chauffante, dont les parois ont été portées à une température régulée de 280°C (qui est la température de fusion du VECTRAN "A" destiné à constituer la matrice).

Pendant la montée en température d'environ 10 min et pendant le maintien de la température à un palier de 280°C pendant 5 min, on a appliqué sur le moule une pression modérée de l'ordre de 5 bars (5x10$^5$ Pa).

Après refroidissement, à partir de la température de 100°C, on a obtenu une plaque plane dans laquelle des fibres tissées en VECTRAN "C" sont noyées dans une matrice transparente et rigide, constituée par le VECTRAN "A" fondu.

Le matériau composite obtenu présente une remarquable transparence aux ondes électromagnétiques ainsi qu'une excellente tenue au feu et à l'isolation thermique.

EXEMPLES 2 et 3

Ces exemples se distinguent de l'exemple 1 par la quantité relative de VECTRAN "A" et de VECTRAN "C".

On réalise (exemple 2) une première plaque plane de fibres unidirectionnelles (VECTRAN "C") représentant 60% en volume de la plaque.

Parallèlement, on réalise (exemple 3) une seconde plaque plane sous forme de tissu renfermant 50% en volume de fibres (VECTRAN "C") bidirectionnelles.

De ces plaques planes, des éprouvettes d'essai mécanique ont été tirées et les résultats obtenus sont portés dans le tableau ci-après.

Dans ce tableau, Rt représente la résistance à la traction, Er représente le module d'Young.

Sur ce tableau, on a fait apparaître en outre les résultats de tests mécaniques effectués sur un stratifié verre/époxy renfermant 50% de fibres de verre en volume, bidirectionnelles.

De ce tableau, il ressort clairement que la résistance à la traction et le module d'Young des matériaux de l'invention sont comparables à ceux d'un composite verre/époxy.

De plus la masse volumique des composites à cristaux liquides de l'invention, de l'ordre de 1,4 g/cm$^3$, est sensiblement réduite par rapport à celle des composites à renfort de verre, allant de 1,8 à 2,1 g/cm$^3$ et est comparable à celle des matériaux composites à base de fibres d'aramide.

Ce gain de poids par rapport aux stratifiés verre/époxy est tout à fait intéressant pour l'application des matériaux composites de l'invention dans le domaine aéronautique, spatial et/ou avionique.

De plus, les matériaux composites obtenus selon l'invention présentent une excellente résistance aux chocs et aux impacts, une ininflammabilité exceptionnelle, un faible pouvoir de dégagement de fumée, une bonne tenue en température, une excellente tenue au vieillissement humide, une résistance aux bases, solvants et acides, une excellente résistance aux radiations ainsi qu'une résistance diélectrique plus élevée que celle de tous les matériaux composites thermoplastiques et thermodurcissables connus.

EXEMPLE 4

Un tissu associant des fibres SRP VICTREX[R] type 2300 et des fibres SRP VICTREX[R] type 320 a aussi été réalisé selon le même processus que décrit dans l'exemple 1. Le SRP type 2300 a une température de fusion de 290°C et est utilisé pour la réalisation de la matrice et le SRP type 320 ayant une température de fusion de 340°C est utilisé pour constituer les renforts du matériau composite.

Le tissu renferme 30% en volume de SRP type 320 et 70% en volume de SRP type 2300.

Les propriétés mécaniques et physico-chimiques de ce tissu sont comparables à celles obtenues pour les matériaux des exemples 2 et 3.

Les matériaux composites de l'invention constitués exclusivement de polymères à cristaux liquides présentent des propriétés mécaniques et physico-chimiques très largement supérieures à celles des composites formés de polymères à l'état amorphe du fait de la structure cristalline unidirectionnelle de ces polymères. Ceci est dû à l'organisation des molécules en chaîne parallèlement pour constituer des fibres continues de polymères a lors que dans les polymères conventionnels à chaînes flexibles, l'organisation des molécules est aléatoire et n'est pas ordonnée selon une même direction.

T A B L E A U
==============

| VALEURS | 60% F UNIDIRECTIONNEL | 50% F BIDIRECTIONNEL | VERRE/EPOXY BIDIRECTIONNEL |
|---|---|---|---|
| Rt (MPa) | 1190 à 1510 | 490 à 630 | 550 |
| Et (GPa) | 45 à 57 | 17 à 27 | 20 |

**Revendications**

1. Demi-produit composite thermoplastique consistant exclusivement en des polymères thermoplastiques à cristaux liquides (PCL) dont au moins un premier polymère thermoplastique à cristaux liquides (PCL)

8

est sous forme de fibres (8, 18) et présente une température de fusion déterminée et dont au moins un second polymère thermoplastique (6, 10, 16) à cristaux liquides (PCL), présente une température de fusion inférieure à celle du premier polymère à cristaux liquides, la différence entre la température de fusion du premier polymère et la température de fusion du second polymère étant au moins égale à 10°C.

2. Demi-produit selon la revendication 1, caractérisé en ce que les fibres (8, 18) de premier polymère à cristaux liquides (PCL) et le second polymère à cristaux liquides (PCL) sont agencés de façon à former un tissu.

3. Demi-produit selon la revendication 1 ou 2, caractérisé en ce que le second polymère à cristaux liquides (PCL) se présente sous forme de fibres (18).

4. Demi-produit selon la revendication 1 ou 2, caractérisé en ce que le second polymère à cristaux liquides (PCL) se présente sous forme d'un gainage (6) de fibres (8) de premier polymère à cristaux liquides (PCL).

5. Demi-produit selon la revendication 1 ou 2, caractérisé en ce que le second polymère à cristaux liquides (PCL) se présente sous forme d'une poudre (10) répartie autour de fibres (8) de premier polymère à cristaux liquides (PCL), une gaine (6) en un troisième polymère à cristaux liquides (PCL) assurant la cohésion des fibres de premier polymère à cristaux liquides (PCL) et de la poudre, ce troisième polymère à cristaux liquides (PCL) ayant une température de fusion inférieure à celle du premier polymère à cristaux liquides (PCL).

6. Demi-produit selon la revendication 3, caractérisé en ce que les fibres (18) de premier polymère à cristaux liquides (PCL) et les fibres (16) de second polymère à cristaux liquides (PCL) sont regroupées sous forme de mèches (12, 14, 22, 24) et que ces mèches sont tissées.

7. Demi-produit selon l'une quelconque des revendications 1 à 6, caractérisé en ce que le premier polymère à cristaux liquides (PCL) représente de 30 à 80% en volume du demi-produit et le second polymère à cristaux liquides (PCL) représente de 20 à 70% en volume du demi-produit.

8. Matériau composite thermoplastique à fibres de renfort (18) noyées dans une matrice (30), réalisé exclusivement en des polymères à cristaux liquides (PCL) et dans lequel les fibres de renfort (18) sont constituées d'au moins un premier polymère thermoplastique à cristaux liquides (PCL), présentant une température de fusion déterminée et dans lequel la matrice (30) est constituée d'au moins un second polymère thermoplastique à cristaux liquides (PCL), présentant une température de fusion inférieure à celle du premier polymère à cristaux liquides (PCL).

9. Matériau selon la revendication 8, caractérisé en ce que les fibres de renfort sont tissées.

10. Matériau selon la revendication 8 ou 9, caractérisé en ce que le premier polymère à cristaux liquides (PCL) représente de 30 à 80% en volume du matériau et le second polymère à cristaux liquides (PCL) représente de 20 à 70% en volume du matériau.

11. Procédé de fabrication d'un matériau composite thermoplastique à fibres de renfort (18) noyées dans une matrice (30), consistant à utiliser le demi-produit selon l'une quelconque des revendications 1 à 7, à le soumettre, sous pression, à une température au moins égale à la température de fusion du second polymère à cristaux liquides (PCL) mais inférieure à la température de fusion du premier polymère à cristaux liquides PCL, et à laisser refroidir le matériau obtenu.

12. Procédé selon la revendication 11, caractérisé en ce que l'on soumet le demi-produit à une température égale à la température de fusion du second polymère à cristaux liquides (PCL).

**Claims**

1. Thermoplastic composite semi-finished product consisting exclusively of liquid crystal thermoplastic polymers (LCP), whereof at least one first liquid crystal thermoplastic polymer (LCP) is in the form of fibres (8,18) and has a given melting point and whereof at least one second liquid crystal thermoplastic polymer (LCP) (6,10,16) has a melting point below that of the first liquid crystal polymer, the difference between the melting point of the first polymer and the melting point of the second polymer being at least 10 °C.

2. Semi-finished product according to claim 1, characterized in that the fibres (8,18) of the first liquid crystal polymer and the second liquid crystal polymer are arranged so as to form a fabric (figs. 1 to 3).

3. Semi-finished product according to claim 1 or 2, characterized in that the second liquid crystal polymer is in the form of fibres (18).

4. Semi-finished product according to claim 1 or 2, characterized in that the second liquid crystal polymer is in the form of a sheathing (6) of fibres (8) of the first liquid crystal polymer.

5. Semi-finished product according to claim 1 or 2, characterized in that the second liquid crystal polymer is in the form of a powder (10) distributed around the fibres (8) of the first liquid crystal polymer, a sheath (6) of a third liquid crystal polymer ensuring the cohesion of the fibres of the first liquid crystal polymer and the powder, said third liquid crystal polymer having a melting point below that of the first liquid crystal polymer.

6. Semi-finished product according to claim 3, characterized in that the fibres (18) of the first liquid crystal polymer and the fibres (16) of the second liquid crystal polymer are grouped in the form of wicks (12,14,22,24) and that said wicks are woven.

7. Semi-finished product according to any one of the claims 1 to 6, characterized in that the first liquid crystal product represents 30 to 80 vol. % of the semi-finished product and the second liquid crystal polymer represents 20 to 70 vol. % of the semi-finished product.

8. Thermoplastic composite material having reinforcing fibres (18) embedded in a matrix (30) produced exclusively from liquid crystal polymers and in which the reinforcing fibres (18) are constituted by at least one first liquid crystal thermoplastic polymer having a given melting point and in which the matrix (30) is constituted by at least one second liquid crystal thermoplastic polymer having a melting point below that of the first liquid crystal polymer.

9. Material according to claim 8, characterized in that the reinforcing fibres are woven.

10. Material according to claim 8 or 9, characterized in that the first liquid crystal polymer represents 30 to 80 vol. % of the material and the second liquid crystal polymer represents 20 to 70 vol. % of the material.

11. Process for the production of a thermoplastic composite material having reinforcing fibres (18) embedded in a matrix (30), consisting of using the semi-finished product according to any one of the claims 1 to 7, and subjecting it, under pressure, to a temperature at least equal to the melting point of the second liquid crystal polymer, but below the melting point of the first liquid crystal polymer and allowing the material obtained to cool.

12. Process according to claim 11, characterized in that the semi-finished product is exposed to a temperature equal to the melting point of the second liquid crystal polymer.

**Patentansprüche**

1. Halbfertigprodukt aus thermoplastischen Verbundmaterial, das ausschließlich aus thermoplastischen Flüssigkristallpolymeren (FKP) besteht, von denen zumindest ein thermoplastisches Flussigkristallpolymer (FKP) in Form von Fasern vorliegt (8, 18) und eine feststehende Schmelztemperatur aufweist, und von denen zumindest ein zweites thermoplastisches Flüssigkristallpolymer (FKP) eine niedrigere Schmelztemperatur aufweist als das erste Flüssigkristallpolymer.

2. Halbfertigprodukt gemäß Anspruch 2, gekennzeichnet dadurch, daß die Fasern (8, 18) des ersten Flüssigkristallpolymers (FKP) mit dem zweiten Flüssigkristallpolymer (FKP) so verbunden sind, daß ein Gewebe gebildet wird (Abbildungen 1 bis 3).

3. Halbfertigprodukt gemäß Anspruch 1 oder 2, gekennzeichnet dadurch, daß das zweite Flussigkristallpolymer (FKP) in Form von Fasern (18) vorliegt.

4. Halbfertigprodukt gemäß Anspruch 1 oder 2, gekennzeichnet dadurch, daß das zweite Flüssigkristallpolymer (FKP) in Form einer Umhüllung (6) von Fasern (8) des ersten Flüssigkristallpolymers (FKP) vorliegt.

5. Halbfertigprodukt gemäß Anspruch 1 oder 2, gekennzeichnet dadurch, daß das zweite Flüssigkristallpolymer (FKP) in Form eines Pulvers (10) vorliegt, das sich um die Fasern (8) des ersten Flüssigkristallpolymers (FKP) verteilt, des weiteren gekennzeichnet durch eine Umhüllung (6) aus einem dritten Flüssigkristallpolymer (FKP), die den Zusammenhalt zwischen den Fasern des ersten Flüssigkristallpolymers (FKP) und dem Pulver gewährleistet, wobei dieses dritte Flüssigkristallpolymer (FKP) eine Schmelztemperatur aufweist, die unter der des ersten Flüssigkristallpolymers (FKP) liegt.

6. Halbfertigprodukt gemäß Anspruch 3, gekennzeichnet dadurch, daß die Fasern (18) des ersten Flüssigkristallpolymers (FKP) und die Fasern (16) des zweiten Flüssigkristallpolymers (FKP) in Form von miteinander verwobenen Vorgespinsten (12, 14, 22, 24) angeordnet sind.

7. Halbfertigprodukt gemäß eines der Ansprüche 1 bis 6, gekennzeichnet dadurch, daß das erste Flüssigkristallpolymer (FKP) 30 bis 80% des Volumens des Halbfertigproduktes und das zweite Flüssigkristallpolymer (FKP) 20 bis 70% da Volumens des Halbfertigproduktes ausmacht.

8. Thermoplastisches Verbundmaterial mit Verstärkungsfasern (18), die in eine Matrix (30) eingelassen sind und ausschließlich aus Flüssigkristallpolymeren (FKP) bestehen, wobei die Verstärkungsfasern (18) mindestens aus einem ersten thermoplastischen Flüssigkristallpolymer (FKP) aufgebaut sind, das eine feststehende Schmelztemperatur aufweist, und gekennzeichnet dadurch, daß die Matrix (30) aus mindestens einem zweiten thermoplastischen Flüssigkristallpolymer (FKP) besteht, dessen Schmelztemperatur unter der des ersten Flüssigkristallpolymers (FKP) liegt.

9. Material gemäß Anspruch 8, gekennzeichnet dadurch, daß die Verstärkungsfasern miteinander verwoben sind

10. Material gemäß Anspruch 8 oder 9, gekennzeichnet dadurch, daß das erste Flüssigkristallpolymer (FKP) 30 bis 80% des Volumens des Materials und das zweite Flüssigkristallpolymer (FKP) 20 bis 70% des Volumens des Materials ausmacht.

11. Verfahren zur Herstellung eines thermoplastischen Verbundmaterials mit Verstärkungsfasern (18), die in eine Matrix (30) eingelassen sind, wobei im Rahmen dieses Verfahrens das Halbfertigprodukt gemäß eines der Ansprüche 1 bis 7 verwendet und unter Druckeinwirkung einer Temperatur ausgesetzt wird, die mindestens so hoch wie die Schmelztemperatur des zweiten Flüssigkristallpolymers (FKP), jedoch geringer als die Schmelztemperatur des ersten Flüssigkristallpolymers (FKP) ist, und bei dem man das solcherart erhaltene Material abkühlen läßt.

12. Verfahren gemäß Anspruch 11, gekennzeichnet dadurch, daß man das Halbfertigprodukt einer Temperatur aussetzt, die der Schmelztemperatur des zweiten Flüssigkristallpolymers (FKP) entspricht.

FIG. 1

FIG. 2

FIG. 3

# FIG. 4

a

b